# FASCICULE DE BREVET EUROPEEN

(11) **EP 1 312 516 B1**
(45) Date de publication et mention de la délivrance du brevet: **05.04.2006**
(21) Numéro de dépôt: 02025141.9
(22) Date de dépôt: 09.11.2002
(51) Int. Cl.: B60R 21/34

(54) **Structure avant d'un véhicule et protection du piéton en cas choc frontal**
Frontstruktur eines Fahrzeugs und Fussgängerschutz im Falle eines Frontalaufpralls
Front structure of a vehicle and protection of the pedestrian in case of frontal crash

(30) Priorité: 16.11.2001 FR 0114806
(43) Date de publication de la demande: 21.05.2003
(73) Titulaire: Peugeot Citroen Automobiles SA, 92200 Neuilly sur Seine (FR)
(72) Inventeur: Piranda, Bruno, 91880 Bouville (FR)
(74) Mandataire: Gicquel, Olivier Yves Gérard

(56) Documents cités:
- EP-A- 1 090 818
- DE-A- 19 948 461
- FR-A- 2 772 700

## Description

La présente invention concerne une structure avant d'un véhicule automobile destinée à permettre la protection du piéton en cas de choc frontal avec ledit véhicule.

Elle se rapport plus particulièrement à un agencement des ailes et du capot de la structure avant d'un véhicule automobile afin de permettre de diminuer les conséquences pour un piéton lors d'un choc frontal avec un véhicule automobile et notamment du choc de la tête sur le capot.

En effet, on a constaté que lors d'un tel choc, la tête du piéton heurte généralement violemment le capot entraînant une déformation du capot jusqu'à la rencontre d'éléments rigides tels que la batterie ou la structure, constituant la cause principale du décès du piéton. En cas de choc sur la périphérie du capot, celui-ci vient rapidement interférer avec la structure, ce qui le rend très agressif et cause des lésions importantes sur le piéton.

On connaît déjà dans l'état de la technique antérieure notamment par le brevet FR-A-2 772 700 un dispositif de protection des piétons constitué d'un capot actif susceptible d'être relevé par des moyens de levage déclenchés par des moyens de détection d'un impact afin de disposer ainsi avant collision d'une course d'absorption de l'énergie du choc tête.

Un tel dispositif donne satisfaction mais nécessite une modification importante de la structure ainsi qu'un coût relativement élevé.

Le but de l'invention est de proposer une structure avant de véhicule automobile qui permet de résoudre tout ou partie des inconvénients précités.

A cet effet, la présente invention a pour objet une structure avant de véhicule automobile destinée à permettre la protection du piéton en cas de choc frontal avec ledit véhicule, constituée en partie d'un capot articulé comprenant une peau intérieure et extérieure et de deux ailes disposées de manière symétrique par rapport audit capot, caractérisée en ce que chacune des ailes est conformée pour s'ouvrir latéralement vers l'extérieur du véhicule sous un effort vertical au moins égal à 300 Newtons appliqué sur le capot permettant ainsi un coulissement vertical dudit capot entre les ailes chacune des ailes comportant un plan de contact présentant un angle d'inclinaison par rapport à un plan vertical et dirigé vers l'intérieur du compartiment moteur, pouvant aller jusqu'à un angle maximal de l'ordre de 40 degrés permettant ainsi d'initier le coulissement du capot à l'intérieur desdites ailes.

Toujours selon l'invention, chacune des ailes comporte un renfort de côté d'habitacle situé à une distance D minimale égale à 80 mm par rapport à la peau intérieure du capot offrant ainsi une course d'absorption de l'énergie engendrée par le choc de la tête du piéton renversé.

Selon une disposition avantageuse, les peaux intérieure et extérieure du capot sont reliées par sertissage selon un plan sensiblement horizontal situé au droit du plan de contact des ailes.

Selon une autre disposition avantageuse, les ailes sont réalisées dans un matériau plus souple que le capot par exemple en matière plastique.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue en coupe transversale d'un côté d'une structure avant selon l'art antérieur d'un véhicule automobile,
- la figure 2 est une vue en coupe transversale d'un côté d'une structure avant d'un véhicule automobile selon l'invention, représenté avant une collision avec un piéton, et
- la figure 3 est une vue en coupe transversale similaire à la figure 1 représenté après une collision avec un piéton.

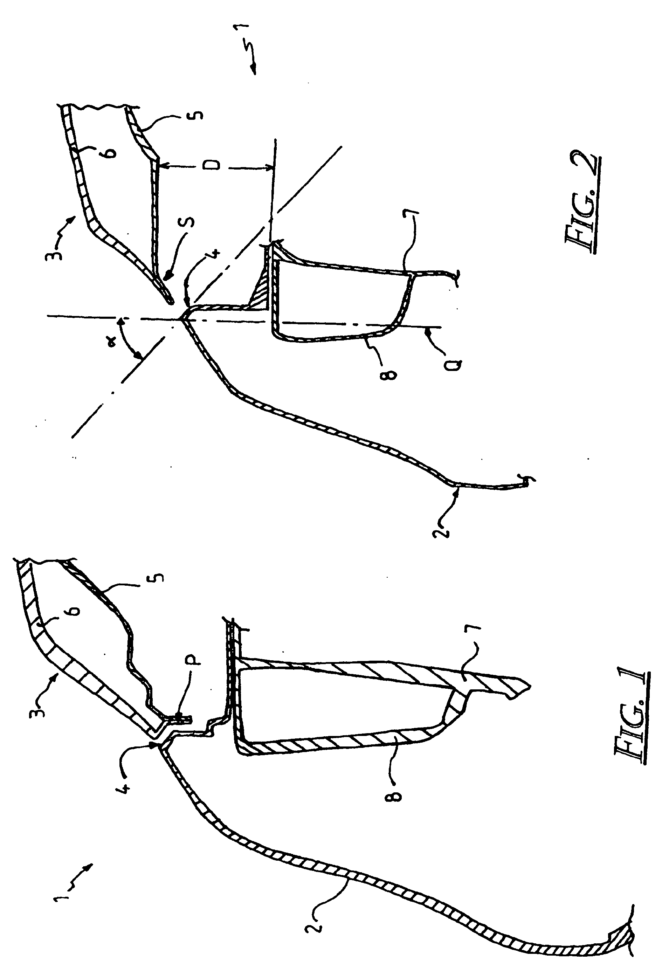

On a représenté à la figure 1, la structure avant 1 classique d'un véhicule automobile en particulier l'agencement des ailes 2 et du capot 3. On peut voir sur cette figure 1, un capot articulé 3 de manière classique soit en partie supérieure permettant son ouverture par l'avant, soit en partie inférieure permettant son ouverture par l'arrière prenant appui sur des butées de capot de type classique (non représentées).

Le capot 3 est constitué d'une peau intérieure 5 et d'une peau extérieure 6 soudées l'une à l'autre par un plan de soudure P verticale situé à proximité du plan de contact 4 de l'aile 2.

De même, chacune des ailes 2 est en outre pourvue d'une doublure d'aile 7 et d'un renfort de côté d'habitacle 8 disposé sensiblement au voisinage du plan de contact 4 de l'aile 2, de manière classique sensiblement de l'ordre de 20 mm de la peau intérieure 5 du capot 3.

Les analyses des différentes collisions entre un piéton et un véhicule ont démontré que le plan de soudure P des peaux intérieure 5 et extérieure 6 se déplaçait verticalement jusqu'au contact avec les renforts de côté d'habitacle 8 qui constituent un élément sous capot rigide et par conséquent limitait la course d'absorption du choc du piéton et présentait donc un risque de décès important.

Dans un souci de simplification de la description de la présente invention, les éléments identiques à l'état de l'art antérieur décrit ci-dessus sont suivis de la même référence numérique.

Afin de résoudre ce problème de déformation du capot 3 en cas de collision frontale avec un piéton, chacune des ailes 2 selon la présente invention est conformée pour s'ouvrir latéralement vers l'extérieur du véhicule sous un effort vertical au moins égal à 300 Newtons appliqué sur le capot 3 permettant ainsi un coulissement vertical dudit capot 3 entre les ailes 2.

Pour ce faire, chacun des plans de contact 4 des ailes 2 présente un angle d'inclinaison α par rapport à un plan vertical Q et dirigé vers l'intérieur du compartiment moteur, pouvant aller jusqu'à un angle maximal de l'ordre de 40 degrés permettant ainsi d'initier le coulissement du capot 3 à l'intérieur des ailes 2.

Par ailleurs, le renfort de côté d'habitacle 8 de chaque aile 2 est situé à une distance D minimale égale à 80 mm par rapport à la peau intérieure 5 du capot 3 offrant ainsi une course d'absorption de l'énergie du choc tête. On comprend, contrairement à la solution classique, que le renfort de côté d'habitacle 8 qui constitue une pièce rigide est abaissé.

De manière préférentielle, cet abaissement des renforts de côté d'habitacle 8 peut être compensé par une augmentation de l'inertie de section desdits renforts offrant ainsi les mêmes caractéristiques structurelles à ces renforts.

En outre, de manière avantageuse les peaux intérieure 5 et extérieure 6 du capot 3 sont reliées par sertissage S selon un plan sensiblement horizontal situé au droit du plan de contact 4 des ailes 2 permettant d'éviter, contrairement aux solutions de l'état de la technique antérieure (figure 1), une déformation du capot 3 au niveau de la jonction des peaux 5 et 6 verticalement en direction des pièces rigides plus rapide que la surface des peaux elles-mêmes.

Selon un mode de réalisation préférentiel, les ailes 2 sont réalisées dans un matériau plus souple que le capot 3 par exemple en matière plastique.

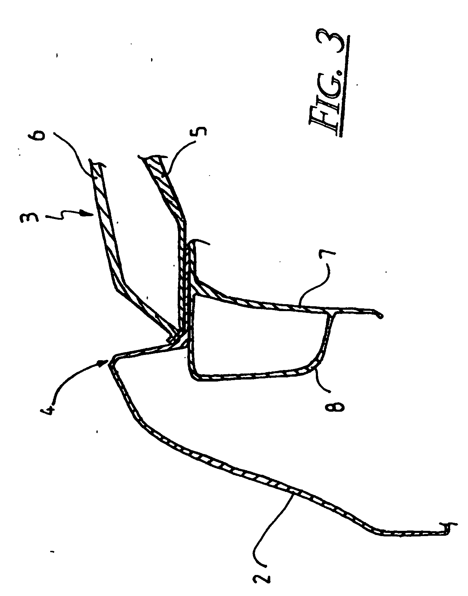

On décrira maintenant en référence notamment à la figure 3 les différentes phases de déformation de la structure avant selon la présente invention permettant de dissiper l'énergie engendrée par le choc de la tête notamment.

Ainsi, lors d'un choc piéton, la tête de ce dernier vient en premier en collision avec le capot 3 qui sous cet effort se déforme et se déplace vers le bas. L'effort que ce capot 3 exerce par l'intermédiaire des plans de contact 4 des ailes 2 entraîne une flexion vers l'extérieur desdites ailes 2 et par voie de conséquence un coulissement vertical à l'intérieur des ailes 2 selon une distance au minimum égale à 80 mm jusqu'au contact avec le renfort de côté d'habitacle 8.

On notera que cette distance de 80 mm permet un gain notable en protection des piétons.

On comprend à la lecture de la description ci-dessus que la structure selon l'invention permet de conserver une architecture classique contrairement au dispositif de l'état de la technique antérieure et est relativement simple à mettre en oeuvre, d'une grande efficacité et assurant une parfaite sécurité.

La présente invention propose ainsi une nouvelle conception de liaison capot et pièces périphériques qui assure une cote d'écrasement du capot et une souplesse des appuis. En outre la structure selon l'invention ne risque pas d'être déclenchée intempestivement

Bien que l'invention ait été décrite en liaison avec un mode de réalisation particulier elle comprend tous les équivalents techniques des moyens décrits.

## Revendications

1. Structure avant de véhicule automobile destinée à permettre la protection du piéton en cas de choc frontal avec ledit véhicule, constituée en partie d'un capot articulé (3) comprenant une peau intérieure (5) et extérieure (6) et de deux ailes (2) disposées de manière symétrique par rapport audit capot (3), **caractérisée en ce que** chacune des ailes (2) est conformée pour s'ouvrir latéralement vers l'extérieur du véhicule sous un effort vertical au moins égal à 300 Newtons appliqué sur le capot (3) permettant ainsi un coulissement vertical dudit capot (3) entre les ailes (2), et que chacune des ailes (2) comporte un plan de contact (4) présentant un angle d'inclinaison (α) par rapport à un plan vertical (Q) et dirigé vers l'intérieur du compartiment moteur, pouvant aller jusqu'à un angle maximal de l'ordre de 40 degrés permettant ainsi d'initier le coulissement du capot (3) à l'intérieur desdites ailes (2).

2. Structure avant selon la revendication 1, **caractérisée en ce que** chacune des ailes (2) comporte un renfort de côté d'habitacle (8) situé à une distance D minimale égale à 80 mm par rapport à la peau intérieure (5) du capot (3) offrant ainsi une course d'absorption de l'énergie engendrée par le choc de la tête du piéton renversé.

3. Structure avant selon la revendication 1 ou 2, **caractérisée en ce que** les peaux intérieure (5) et extérieure (6) du capot (3) sont reliées par sertissage selon un plan sensiblement horizontal situé au droit du plan de contact (4) des ailes (2).

4. Structure selon l'une quelconque des revendications précédentes, **caractérisée en ce que** les ailes (2) sont réalisées dans un matériau plus souple que le capot (3) par exemple en matière plastique.

## Patentansprüche

1. Vorderer Aufbau eines Kraftfahrzeugs, der dazu bestimmt ist, den Schutz des Fußgängers bei einem Frontalaufprall mit dem genannten Fahrzeug zu erlauben, bestehend unter anderem aus einer klappbaren Haube (3), die eine Innenhaut (5) und eine Außenhaut (6) aufweist, und aus zwei Flügeln (2), die symmetrisch in Bezug auf die Haube (3) angeordnet sind, **dadurch gekennzeichnet, dass** jeder der Flügel (2) ausgebildet ist, um sich unter einer auf die Haube (3) ausgeübten senkrechten Kraft, die mindestens oder gleich 300 Newton beträgt, zur Außenseite des Fahrzeugs seitlich zu öffnen und daher ein senkrechtes Gleiten der Haube (3) zwischen den Flügeln (2) zu erlauben, und dass jeder der Flügel (2) eine Kontaktebene (4) aufweist, die einen Neigungswinkel (á) zu einer senkrechten Ebene (Q) aufweist und in das Innere des Motorraums gerichtet ist, der bis zu einem maximalen Winkel in der Größenordnung von 40° gehen kann und es daher erlaubt, ein Gleiten der Haube (3) zwischen den genannten Flügeln (2) auszulösen.

2. Vorderer Aufbau nach Anspruch 1, **dadurch gekennzeichnet, dass** jeder der Flügel (2) eine seitliche Karosserieverstärkung (8) aufweist, die in einer Mindestentfernung D gleich 80 mm zu der Innenverkleidung (5) der Haube (3) liegt und daher einen Absorptionsweg für die Energie bietet, die von dem Aufprall des Kopfes des umgefahrenen Fußgängers stammt.

3. Vorderer Aufbau nach Anspruch 1 oder 2, **dadurch gekennzeichnet, dass** die Innenhaut (5) und die Außenhaut (6) der Haube (3) durch Falzen gemäß einer im Wesentlichen horizontalen Ebene, die sich im rechten Winkel zu der Berührungsebene (4) der Flügel (2) befindet, verbunden sind.

4. Aufbau nach einem der vorhergehenden Ansprüche, **dadurch gekennzeichnet, dass** die Flügel (2) aus einem geschmeidigeren Werkstoff hergestellt sind als die Haube (3), zum Beispiel aus Kunststoff.

## Claims

1. Front structure of an automotive vehicle, said structure being intended to permit the pedestrian to be protected in the case of frontal impact with said vehicle and being made up, in part, of a hinged bonnet (3) comprising an inner skin (5) and an outer skin (6) and two wings (2), disposed in a symmetrical manner relative to said bonnet (3), **characterised in that** each of the wings (2) is designed to open laterally towards the exterior of the vehicle under a vertical force at least equal to 300 Newtons applied on the bonnet (3), thus permitting a vertical sliding of said bonnet (3) between the wings (2), and **in that** each of the wings (2) includes a contact plane (4), which has an angle of inclination (α) relative to a vertical plane (Q) and is directed towards the interior of the engine compartment, so that it is able to attain a maximum angle in the order of 40 degrees, thus permitting the sliding of the bonnet (3) to the interior of said wings (2) to be initiated.

2. Front structure according to claim 1, **characterised in that** each of the wings (2) includes a side reinforcement of the cab (8), situated at a minimum distance D equal to 80 mm relative to the inner skin (5) of the bonnet (3), thus offering a path for absorbing the energy caused by the impact of the head of the pedestrian who has been knocked-over.

3. Front structure according to claim 1 or 2, **characterised in that** the inner skin (5) and the outer skin (6) of the bonnet (3) are connected by crimping along a substantially horizontal plane situated at right angles to the plane of contact (4) of the wings (2).

4. Structure according to any of the preceding claims, **characterised in that** the wings (2) are formed from a more flexible material than the bonnet (3), for example they are formed from plastics material.
